# EUROPÄISCHE PATENTSCHRIFT

(11) **EP 3 850 152 B1**
(45) Veröffentlichungstag und Bekanntmachung des Hinweises auf die Patenterteilung: **05.11.2025**
(21) Anmeldenummer: 19755343.1
(22) Anmeldetag: 14.08.2019
(51) Int. Cl.: D21F 7/00, B65H 23/04

(54) **BAHNZUGMESSVORRICHTUNG, VERWENDUNG EINER SOLCHEN SOWIE EINE WALZE UMFASSEND EINE BAHNZUGMESSVORRICHTUNG**
WEB-TENSION-MEASURING DEVICE, USE OF SUCH, AND A ROLLER COMPRISING A WEB-TENSION-MEASURING DEVICE
DISPOSITIF DE MESURE D'UNE TENSION DE BANDE, UTILISATION D'UN TEL DISPOSITIF ET ROULEAU COMPRENANT UN DISPOSITIF DE MESURE D'UNE TENSION DE BANDE

(30) Priorität: 12.09.2018 DE 102018122207
(43) Veröffentlichungstag der Anmeldung: 21.07.2021
(73) Patentinhaber: Voith Patent GmbH, 89522 Heidenheim (DE)
(72) Erfinder: EHRET, David, 73540 Heubach (DE); JOOS, Uwe, 89551 Königsbronn (DE); SOLDAN, Samuel, 89537 Giengen (DE); LEITENBERGER, Werner, 88281 Schlier (DE)
(86) Internationale Anmeldenummer: PCT/EP2019/071771
(87) Internationale Veröffentlichungsnummer: WO 2020/052893

(56) Entgegenhaltungen:
- WO-A1-96/17233
- WO-A2-2011/120753
- DE-A1- 2 552 576

## Beschreibung

Die Erfindung betrifft eine Bahnzugmessvorrichtung, die Verwendung einer solchen sowie eine Walze umfassend eine Bahnzugmessvorrichtung, im Einzelnen gemäß den unabhängigen Ansprüchen. Bevorzugt geht es dabei um eine Verwendung dieser in Maschinen zur Herstellung oder Behandlung von Faserstoffbahnen, wie Papier-, Karton- oder Tissuepapier.

Zur Ermittlung des Zuges an Bespannungen in solchen Maschinen werden beispielhaft Kraftmessdosen eingesetzt, die zwischen zwei Platten und über ein Drehgelenk mit einem Teil der Zugkraft der jeweiligen Bespannung beaufschlagt werden. Einer derart gebildeten Wippe ist jedoch lediglich ein Druckkraftsensor zugeordnet. Sobald sich die Platten aufeinander zu bewegen, wird eine Druckbelastung erfasst. Eine Druckmessung ist ohne eine vergleichsweise aufwendige Konstruktion mit Vorspannelementen nicht möglich. So muss die Kraftmessdose dann stets in einer entsprechenden Einbaulage erfolgen, um die Druckkraft messen zu können. Eine davon abweichende Anordnung, z.B. kopfüber ist dadurch nur unter vergleichsweise großem technischen Aufwand möglich.

Aus dem Stand der Technik ist die WO 2011/120753 A2 bekannt, die eine Bahnzugsmessvorrichtung mit zwei Platten offenbart. Weiterhin ist im Stand der Technik die DE 25 52 576 A1 bekannt.

Die Aufgabe der Erfindung ist es eine gegenüber dem Stand der Technik verbesserte Bahnzugmessvorrichtung anzugeben. So soll insbesondere eine zuverlässige Bahnzugmessung möglich sein, und zwar unabhängig von der Einbaulage der Bahnzugmessvorrichtung. Zudem soll sich diese durch einen geringen konstruktiven und fertigungstechnischen Aufwand auszeichnen.

Die Aufgabe wird erfindungsgemäß durch eine Ausführung gemäß den unabhängigen Ansprüchen gelöst. Weitere vorteilhafte Merkmale der erfindungsgemäßen Ausführung finden sich in den Unteransprüchen.

Die Erfinder haben erkannt, dass die erfindungsgemäße Aufgabe besonders zufriedenstellend gelöst wird, wenn ein Kraftaufnehmer vorgesehen wird, der sowohl Druck- als auch Zugbelastungen detektieren kann. Dadurch kann eine Bahnzugmessvorrichtung bereitgestellt werden, die unabhängig von ihrer Einbaulage stets zuverlässig den Bahnzug einer wenigstens teilweise um den Außenumfang einer Walze geschlungenen Bahn erfasst.

Mit dem Begriff Bahnzug F_{z} ist die Zugkraft oder deren entgegengesetzte Reaktionskraft gleichen Betrages, jeweils in Newton gemessen, gemeint, die auf die Bahn einwirkt, während sich diese zu deren Transport auf dem Außenumfang der Walze abwälzt und diese dazu wenigstens teilweise umschlingt. Der Bahnzug wird also gemäß der vorliegenden Erfindung indirekt über an der Lageranordnung der Walze anliegende Reaktionskräfte und/oder -momente gemessen. Die Grundlagen einer solchen Berechnung sind in WO 96/17233 offenbart. In dem Dokument entspricht die Kraft F_{D} dem Bahnzug F_{z}. Dabei sind die dort beschriebenen Sensoren reine Druckkraftaufnehmer.

Unter einer Bahn im Sinne der Erfindung wird ein endliches oder unendliches flächiges Gebilde verstanden, dessen Erstreckung in Längs- und Querrichtung wesentlich größer ist als in Höhenrichtung. Dazu gehören Materialbahnen, wie Faserstoffbahnen, beispielsweise in Form von Papier-, Karton- oder Tissuebahnen. Ferner werden unter derartigen Bahnen auch Funktionsbahnen, insbesondere zum Transport und/oder der Stützung derartiger Faserstoffbahnen selbst verstanden. Solche Funktionsbahnen können Bespannungen sein. Bespannungen sind endlos umlaufende Bänder oder Schlaufen von Bändern, die über zumindest zwei, vorzugsweise eine Mehrzahl von Walzen oder Umlenkrollen geführt sind und der Führung und Stützung von mit diesen über eine vordefinierte Strecke transportierten Faserstoffbahnen dienen. In Maschinen zur Herstellung oder Behandlung von Materialbahnen, insbesondere Papier-, Karton- oder Tissuebahnen dienen Bespannungen der Stützung und Führung einer Faserstoffsuspension oder Faserstoffbahn. Derartige Bespannungen können dann Formier- oder Trockensieb sowie Pressfilze sein.

Mit dem Begriff Belastung sind alle äußeren Kraftgrößen (Kräfte und Momente) gemeint, die auf ein Bauteil wirken.

Besonders bevorzugt wird als Kraftaufnehmer ein Schersensor verwendet werden, der Scherbelastungen aufnimmt. So lassen sich mit nur einem einzigen Sensor zugleich Zug- wie Druckbelastungen zwischen den beiden Platten messen. Der konstruktive Aufwand einer solchen Bahnzugmessvorrichtung wird damit erheblich verringert.

Die vorliegende Erfindung betrifft eine Walze, insbesondere eine Walze einer Maschine zur Herstellung oder Behandlung von Faserstoffbahnen, wie Papier-, Karton- oder Tissuepapier, umfassend eine um eine Walzenachse drehbare Welle, die im Bereich ihrer axialen Enden in einer Lageranordnung drehbar gelagert ist, und die auf wenigstens einem Teil ihres Außenumfangs von einer Bahn umschlingbar ist, wobei zumindest einer Lageranordnung der Welle eine erfindungsgemäße Bahnzugmessvorrichtung zugeordnet ist.

Ferner betrifft die vorliegende Erfindung die Lageranordnung umfassend ein Lagergehäuse und eine mittelbar oder unmittelbar daran angeordnete erfindungsgemäße Bahnzugmessvorrichtung.

Schließlich betrifft die vorliegende Erfindung auch die Verwendung einer erfindungsgemäßen Bahnzugmessvorrichtung zur Messung des Bahnzuges einer wenigstens teilweise den Außenumfang einer erfindungsgemäßen Walze umschlingenden Bahn.

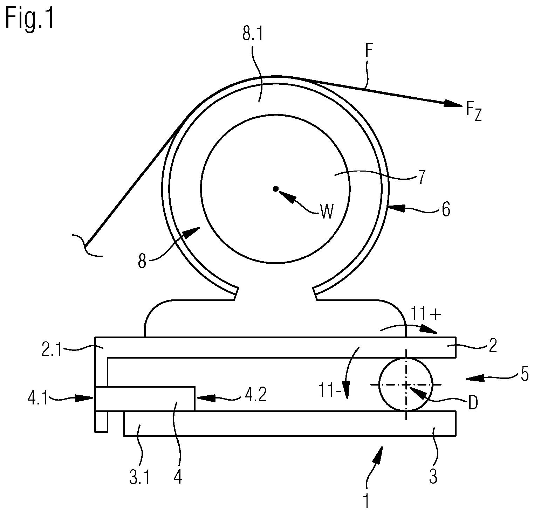

Anhand von Ausführungsbeispielen werden weitere vorteilhafte Ausprägungen der Erfindung unter Bezugnahme auf die Zeichnungen erläutert. Die genannten Merkmale können nicht nur in der dargestellten Kombination vorteilhaft umgesetzt werden, sondern auch einzeln untereinander kombiniert werden. Die einzige Fig. 1 zeigt eine mögliche Ausführungsform einer solchen erfindungsgemäßen Bahnzugmessvorrichtung in einer schematisch und daher nicht maßstäblichen Seitenansicht in Richtung der Drehachse D der Bahnzugmessvorrichtung 1.

Wie man der Fig. 1 entnimmt, kann die Bahnzugmessvorrichtung 1 dazu herangezogen werden, um den Bahnzug F_{z} einer von einer Walze 6 transportierten Bahn F indirekt zu erfassen. Eine solche Walze 6 umfasst eine um eine Walzenachse W drehbare Welle 7. Diese ist auf einem Teil ihres Außenumfangs stets von der Bahn F umschlungen. Die Walze 6 kann damit eine angetriebene Walze, dann Leitwalze genannt, oder eine mitlaufende, dann Umlenkwalze genannt, sein. In jedem Fall weist die Walze 6 an ihren beiden axialen Enden eine Lageranordnung 8 auf, um die Axial- und/oder Radialkräfte dieser an z.B. eine Stuhlung der Maschine abzuleiten.

Zur indirekten Erfassung des Bahnzuges F_{z} weist zumindest eine (oder beide) Lageranordnungen 8 ein Lagergehäuse 8.1 auf, an dem die Bahnzugmessvorrichtung 1 angeschlossen ist. Aus den am Lagergehäuse 8.1 angreifenden Reaktionskräften, kann dann auf den tatsächlich vorliegenden Bahnzug F_{z} geschlossen werden.

Zur Erfassung dieser Reaktionskräfte umfasst die Bahnzugmessvorrichtung 1 zwei Platten 2, 3, die vorliegend zueinander mit Abstand, hier z.B. parallel zueinander, angeordnet sind. An ihrem einen Ende sind beide Platten 2, 3 hier um die Drehachse D relativ zueinander im Winkel verschwenkbar. Dieses Verschwenken (bzw. Verdrehen) kann z.B. mittels eines Drehgelenks 5, über das die beiden Platten 2, 3 miteinander verbunden sind, erzielt werden. So können nun die freien Enden 2.1, 3.1 der Platten 2, 3 aufeinander zu und voneinander weg bewegt werden. Um eine solche Bewegung zuzulassen sind die Platten bevorzugt separat zueinander ausgeführt, das heißt also im Bereich der freien Enden 2.1, 3.1 nicht einteilig miteinander ausgeführt. Prinzipiell wäre es denkbar, beide Platten 2, 3 mittels einer dritten Platte (nicht dargestellt) zu verbinden. Diese könnte sich zwischen den beiden Platten 2, 3 verjüngen und daher bei Belastung einen Drehpunkt ausbilden, um den sich die beiden Platten 2, 3 zueinander verschwenken könnten.

Eben im Bereich der freien Enden 2.1, 3.1 der Platten 2, 3 ist ein Kraftaufnehmer 4 angeordnet. Dieser ist gemäß der Erfindung so ausgeführt, dass er sowohl Zug- als auch Druckbelastungen, die sich infolge der Verdrehbewegung zwischen den beiden Platten 2, 3 ergeben, detektieren kann.

Um eben sowohl Zug- als auch Druckbelastungen aufzunehmen, kann der Kraftaufnehmer 4 als Schersensor ausgeführt sein. Besonders kann dann das eine axiale Ende 4.1 des Kraftaufnehmers 4 mit dem freien Ende 2.1 der einen Platte 2 und das andere axiale Ende 4.2 des Kraftaufnehmers 4 mit dem anderen freien Ende 3.1 der weiteren Platte 3, das dem der ersten Platte gegenüberliegt verbunden oder verbindbar sein. Bewegt sich nun infolge einer Belastung das freie Ende 2.1 hier der Platte 2 auf das freie Ende 3.1 der Platte 3 zu, so wird eine Druckbelastung vom Kraftaufnehmer 4 detektiert. Es ergibt sich ein Moment M-, das im Gegenuhrzeigersinn wirkt und am Drehpunkt D angreift. Der Winkel, den beide Platten 2, 3 miteinander begrenzen, wird kleiner. Wird in entgegengesetzter Drehrichtung das freie Ende 2.1 der Platte 2 vom freien Ende 3.1 der Platte 3 weggedreht, so nimmt der Kraftaufnehmer 4 eine Zugkraft auf. Dies entspricht einem Drehmoment M+ im Uhrzeigersinn um den Drehpunkt D. Der Winkel, den beide Platten 2, 3 miteinander begrenzen, wird größer. Das Drehmoment ergibt sich daher, dass der Kraftaufnehmer 4 nicht im Drehpunkt D liegt. Wie eingangs ausgeführt, kann nun über die Zug- bzw. Druckbelastungen an den Platten 2, 3, die sich infolge der Reaktionskräfte am Lagergehäuse 8.1 ergeben, auf den Betrag des Bahnzugs F_{z} geschlossen werden.

Grundsätzlich wäre auch folgende, nicht dargestellte Ausführungsform denkbar: Anstelle oder zusätzlich zum Drehgelenk 5 aus Fig.1 würde ein weiterer Kraftaufnehmer 4 vorgesehen. Die axialen Enden 2.1, 3.1 der Platten 2, 3 könnten analog wie in Fig. 1 ausgeführt sein. Das Drehgelenk bzw. der Drehpunkt (auch ein gedachter) würde sich nun zwischen den beiden Kraftaufnehmern befinden. Auch mit einer solchen Ausführungsform können die erfindungsgemäßen Vorteile gut umgesetzt werden. Dabei gilt das bereits zur Fig. 1 ausgeführte analog. In beiden Fällen ist pro freies Ende der Platten je nur ein erfindungsgemäßer Kraftaufnehmer nötig.

Unabhängig von der dargestellten Ausführungsform ist es von Vorteil, wenn der Drehpunkt D der beiden Platten nicht in einer Lotebene auf die Platten 2, 3 durch die Walzenachse W liegt, sondern dazu beabstandet ist. So kann z.B. der Drehpunkt D so wie in Fig. 1 gezeigt, gewählt sein, dass er den axialen Enden 2.1, 3.1 der Platten 2, 3, gegenüberliegt. Der Kraftaufnehmer 4 und die Drehachse D der Bahnzugmessvorrichtung 1 liegen in einer Ebene, die senkrecht zu einer Ebene durch die Walzenachse W verläuft. Hier verläuft die Drehachse D außerhalb und somit beabstandet zu dieser Ebene. Anders ausgerückt kann der Drehpunkt D an den dem Kraftaufnehmer gegenüberliegenden axialen Enden der Platten 2, 3 angeordnet sein. Hierdurch können in der dargestellten Einbaulage der Fig. 1 auch Kräfte mittels der Bahnzugmessvorrichtung ermittelt werden, die senkrecht auf die Platten durch die Walzenachse W auf die Bahnzugmessvorrichtung einwirken.

## Patentansprüche

1. Bahnzugmessvorrichtung (1), mit zwei Platten (2, 3), **dadurch gekennzeichnet, dass** die zwei Platten (2, 3)um eine Drehachse relativ zueinander verdrehbar sind und zwar so, dass das eine freie Ende der einen Platte auf das entsprechende, gegenüberliegende freie Ende der anderen Platte zu oder von diesem weg bewegbar ist, mit einen Kraftaufnehmer, der im Bereich der freien Enden der beiden Platten (2, 3) angeordnet ist, wobei der Kraftaufnehmer (4) außerhalb der Drehachse angeordnet ist und derart ausgeführt ist, dass dieser bei einer Bewegung der freien Enden (2.1, 3.1) der beiden Platten (2, 3) aufeinander zu eine aus dieser Bewegung entsprechende Druckbelastung und bei einer Bewegung der freien Enden (2.1, 3.1) voneinander weg eine entsprechende Zugbelastung zwischen diesen beiden Platten (2, 3) erfasst.

2. Bahnzugmessvorrichtung (1) nach Anspruch 1, **dadurch gekennzeichnet, dass** die beiden Platten (2, 3) über ein Drehgelenk (5) miteinander gekoppelt sind, sodass diese um die Drehachse relativ zueinander verdrehbar sind.

3. Bahnzugmessvorrichtung (1) nach Anspruch 1 oder 2, **dadurch gekennzeichnet, dass** die Platten (2, 3) mit Abstand zueinander, bevorzugt übereinander angeordnet sind.

4. Bahnzugmessvorrichtung (1) nach einem der Ansprüche 1 bis 3, **dadurch gekennzeichnet, dass** die Platten (2, 3) zueinander separat ausgeführt sind.

5. Bahnzugmessvorrichtung (1) nach einem der Ansprüche 1 bis 4, **dadurch gekennzeichnet, dass** der Kraftaufnehmer (4) zwischen den beiden Platten (2, 3) angeordnet ist.

6. Bahnzugmessvorrichtung (1) nach einem der Ansprüche 1 bis 5, **dadurch gekennzeichnet, dass** das eine axiale Ende (4.1) des Kraftaufnehmers (4) mit dem freie Ende (2.1) der einen Platte (2) und das andere axiale Ende (4.2) des Kraftaufnehmers (4) mit dem freien, der ersten Platte gegenüberliegenden Ende (3.1) der anderen Platte (3) verbunden ist, sodass der Kraftaufnehmer (4) bei einer entsprechenden Zugbelastung oder Druckbelastung auf Scherung belastet wird.

7. Bahnzugmessvorrichtung (1) nach einem der Ansprüche 1 bis 6, **dadurch gekennzeichnet, dass** je freies Ende der Platten (2, 3) ein einziger Kraftaufnehmer (4) vorgesehen ist.

8. Bahnzugmessvorrichtung (1) nach einem der Ansprüche 1 bis 7, **dadurch gekennzeichnet, dass** der Kraftaufnehmer (4) als Schersensor zum Aufnehmen von Scherbelastungen ausgeführt ist.

9. Walze (6) mit einer Lageranordnung, insbesondere Walze einer Maschine zur Herstellung oder Behandlung von Faserstoffbahnen, wie Papier-, Karton- oder Tissuepapier, umfassend eine um eine Walzenachse (W) drehbare Welle (7), die im Bereich ihrer axialen Enden in der Lageranordnung (8) drehbar gelagert ist, wobei die Walze (6) auf wenigstens einem Teil ihres Außenumfangs von einer Bahn (F) umschlingbar ist, wobei zumindest einer Lageranordnung (8) der Welle (7) eine Bahnzugmessvorrichtung (1) nach einem der Ansprüche 1 bis 8 zugeordnet ist.

10. Walze (6) nach Anspruch 9, **dadurch gekennzeichnet, dass** die Lageranordnung (8) ein Lagergehäuse (8.1) umfasst, an welches die Bahnzugmessvorrichtung (1) mittelbar oder unmittelbar angeschlossen ist.

11. Walze (6) nach Anspruch 9 oder 10, **dadurch gekennzeichnet, dass** die Drehachse der Bahnzugmessvorrichtung (1) parallel und beabstandet zu der Walzenachse (W) der Walze (6) verläuft.

12. Walze (6) nach einem der Ansprüche 9 bis 11, **dadurch gekennzeichnet, dass** der Kraftaufnehmer (4) und die Drehachse (D) der Bahnzugmessvorrichtung (1) in einer Ebene liegen, die senkrecht zu einer Ebene durch die Walzenachse (W) verläuft, wobei bevorzugt die Drehachse (D) außerhalb und somit beabstandet zu dieser Ebene liegt.

13. Verwendung einer Bahnzugmessvorrichtung (1) gemäß einem der Ansprüche 1 bis 8 zur Messung des Bahnzuges (F_{z}) einer wenigstens teilweise den Außenumfang einer Walze (6) umschlingenden Bahn (F), wobei die Walze (6) bevorzugt gemäß einem der Ansprüche 9 bis 12 ausgeführt ist.

14. Verwendung gemäß Anspruch 13, **dadurch gekennzeichnet, dass** die Bahn (F) eine Faserstoffbahn, wie Papier-, Karton- oder Tissuebahn oder eine Bespannung, wie Formier- oder Trockensieb oder Pressfilz ist.

## Claims

1. Web tension measuring device (1), having two plates (2, 3), **characterised in that** the two plates (2, 3) can be rotated relative to one another about an axis of rotation in such a way that one free end of one plate can be moved towards or away from the corresponding opposite free end of the other plate, having a force transducer which is arranged in the region of the free ends of the two plates (2, 3), the force transducer (4) being arranged outside the axis of rotation and being designed in such a way that, when the free ends (2.1, 3.1) of the two plates (2, 3) towards each other and, when the free ends (2.1, 3.1) move away from each other, detects a corresponding tensile load between these two plates (2, 3).

2. Web tension measuring device (1) according to claim 1, **characterised in that** the two plates (2, 3) are coupled to one another via a pivot joint (5) so that they can be rotated relative to one another about the axis of rotation.

3. Web tension measuring device (1) according to claim 1 or 2, **characterised in that** the plates (2, 3) are arranged at a distance from one another, preferably one above the other.

4. Web tension measuring device (1) according to one of claims 1 to 3, **characterised in that** the plates (2, 3) are designed separately from one another.

5. Web tension measuring device (1) according to one of claims 1 to 4, **characterised in that** the force transducer (4) is arranged between the two plates (2, 3).

6. Web tension measuring device (1) according to one of claims 1 to 5, **characterised in that** one axial end (4.1) of the force transducer (4) is subjected to shear loading (2.1) of one plate (2) and the other axial end (4.2) of the force transducer (4) is connected to the free end (3.1) of the other plate (3) opposite the first plate, so that the force transducer (4) is subjected to shear loading in the event of a corresponding tensile load or compressive load.

7. Web tension measuring device (1) according to one of claims 1 to 6, **characterised in that** a single force transducer (4) is provided for each free end of the plates (2, 3).

8. Web tension measuring device (1) according to one of claims 1 to 7, **characterised in that** the force transducer (4) is designed as a shear sensor for recording shear loads.

9. Roll (6), in particular roll of a machine for the production or treatment of fibrous webs, such as paper, cardboard or tissue paper, comprising a shaft (7) which can rotate about a roll axis (W) and is mounted rotatably in a bearing arrangement (8) in the region of its axial ends, it being possible for a web (F) to wrap around at least part of the outer circumference of the roll (6), a web tension measuring device (1) according to one of claims 1 to 8 being assigned to at least one bearing arrangement (8) of the shaft (7).

10. Roller (6) according to claim 9, **characterised in that** the bearing arrangement (8) comprises a bearing housing (8.1) to which the web tension measuring device (1) is directly or indirectly connected.

11. Roller (6) according to claim 9 or 10, **characterised in that** the axis of rotation of the web tension measuring device (1) runs parallel to and at a distance from the roller axis (W) of the roller (6).

12. Roller (6) according to one of claims 9 to 11, **characterised in that** the force transducer (4) and the axis of rotation (D) of the web tension measuring device (1) lie in a plane which runs perpendicular to a plane through the roller axis (W), the axis of rotation (D) preferably lying outside and thus at a distance from this plane.

13. Use of a web tension measuring device (1) according to one of claims 1 to 8 for measuring the web tension (F_{z}) of a web (F) at least partially wrapping around the outer circumference of a roller (6), wherein the roller (6) is preferably designed according to one of claims 9 to 12.

14. Use according to claim 13, **characterised in that** the web (F) is a fibrous web, such as paper, cardboard or tissue web or a covering, such as forming or dryer fabric or press felt.

## Revendications

1. Dispositif de mesure de traction de bande (1), avec deux plaques (2, 3), **caractérisé en ce que** les deux plaques (2, 3) peuvent être tournées l'une par rapport à l'autre autour d'un axe de rotation et ce, de telle sorte qu'une extrémité libre d'une plaque peut être rapprochée ou éloignée de l'extrémité libre correspondante opposée de l'autre plaque, avec un capteur de force qui est disposé dans la zone des extrémités libres des deux plaques (2, 3), le capteur de force (4) étant disposé à l'extérieur de l'axe de rotation et étant réalisé de telle sorte que celui-ci, lors d'un mouvement des extrémités libres (2.1, 3.1) des deux plaques (2, 3) l'une vers l'autre une charge de compression correspondant à ce mouvement et, lors d'un mouvement des extrémités libres (2.1, 3.1) s'éloignant l'une de l'autre, une charge de traction correspondante entre ces deux plaques (2, 3).

2. Dispositif de mesure de traction de bande (1) selon la revendication 1, **caractérisé en ce que** les deux plaques (2, 3) sont couplées l'une à l'autre par l'intermédiaire d'une articulation rotative (5), de sorte qu'elles peuvent être tournées l'une par rapport à l'autre autour de l'axe de rotation.

3. Dispositif de mesure de traction de bande (1) selon la revendication 1 ou 2, **caractérisé en ce que** les plaques (2, 3) sont disposées à distance l'une de l'autre, de préférence l'une au-dessus de l'autre.

4. Dispositif de mesure de traction de bande (1) selon l'une des revendications 1 à 3, **caractérisé en ce que** les plaques (2, 3) sont réalisées séparément l'une de l'autre.

5. Dispositif de mesure de traction ferroviaire (1) selon l'une des revendications 1 à 4, **caractérisé en ce que** le capteur de force (4) est disposé entre les deux plaques (2, 3).

6. Dispositif de mesure de traction ferroviaire (1) selon l'une des revendications 1 à 5, **caractérisé en ce que** l'une des extrémités axiales (4.1) du capteur de force (4) sollicite en cisaillement (2.1) l'une des plaques (2) et l'autre extrémité axiale (4.2) du capteur de force (4) est reliée à l'extrémité libre (3.1) de l'autre plaque (3), opposée à la première plaque, de sorte que le capteur de force (4) est sollicité en cisaillement lorsqu'il est soumis à une charge de traction ou de compression correspondante.

7. Dispositif de mesure de traction ferroviaire (1) selon l'une des revendications 1 à 6, **caractérisé en ce qu'**il est prévu un seul capteur de force (4) par extrémité libre des plaques (2, 3).

8. Dispositif de mesure de traction de bande (1) selon l'une des revendications 1 à 7, **caractérisé en ce que** le capteur de force (4) est réalisé sous la forme d'un capteur de cisaillement pour enregistrer des charges de cisaillement.

9. Rouleau (6), en particulier rouleau d'une machine de fabrication ou de traitement de bandes de matière fibreuse, comme du papier, du carton ou du papier tissu, comprenant un arbre (7) pouvant tourner autour d'un axe de rouleau (W), qui est logé de manière rotative dans un agencement de palier (8) dans la zone de ses extrémités axiales, le rouleau (6) pouvant être entouré par une bande (F) sur au moins une partie de sa périphérie extérieure, un dispositif de mesure de traction de bande (1) selon l'une des revendications 1 à 8 étant associé à au moins un agencement de palier (8) de l'arbre (7).

10. Rouleau (6) selon la revendication 9, **caractérisé en ce que** l'agencement de palier (8) comprend un logement de palier (8.1) auquel le dispositif de mesure de traction de bande (1) est raccordé directement ou indirectement.

11. Rouleau (6) selon la revendication 9 ou 10, **caractérisé en ce que** l'axe de rotation du dispositif de mesure de traction de bande (1) s'étend parallèlement et à distance de l'axe de rouleau (W) du rouleau (6).

12. Rouleau (6) selon l'une des revendications 9 à 11, **caractérisé en ce que** le capteur d'effort (4) et l'axe de rotation (D) du dispositif de mesure de traction de bande (1) sont situés dans un plan perpendiculaire à un plan passant par l'axe du rouleau (W), de préférence l'axe de rotation (D) étant situé à l'extérieur et donc à distance de ce plan.

13. Utilisation d'un dispositif de mesure de traction de bande (1) selon l'une quelconque des revendications 1 à 8 pour mesurer la traction de bande (F_{z}) d'une bande (F) s'enroulant au moins partiellement autour de la périphérie extérieure d'un rouleau (6), ledit rouleau (6) étant de préférence réalisé selon l'une quelconque des revendications 9 à 12.

14. Utilisation selon la revendication 13, **caractérisée en ce que** la bande (F) est une bande fibreuse, telle qu'une bande de papier, de carton ou de papier tissu, ou une toile, telle qu'une toile de formation ou de séchage ou un feutre de presse.
